# EUROPEAN PATENT SPECIFICATION

(11) **EP 2 293 296 B1**
(45) Date of publication and mention of the grant of the patent: **23.05.2012**
(21) Application number: 10160900.6
(22) Date of filing: 23.04.2010
(51) Int. Cl.: G11B 7/085

(54) **Focus jump method and optical disc apparatus**
Fokussprungverfahren und optische Plattenvorrichtung
Procédé de saut de focalisation et appareil de disque optique

(30) Priority: 26.08.2009 JP 2009194959
(43) Date of publication of application: 09.03.2011
(73) Proprietor: Hitachi Consumer Electronics Co., Ltd., Tokyo (JP)
(72) Inventor: Ishikawa, Yoshinori, Tokyo 100-8220 (JP)
(74) Representative: Kirschner, Klaus Dieter

(56) References cited:
- EP-A1- 1 884 941
- EP-A2- 1 496 509
- US-A1- 2002 195 540

## Description

The present invention relates to a focus jump method and an optical disc apparatus.

For a purpose of improving a recording capacity of an optical disc, there has been a practical use of the optical disc having a plurality of recording layers. For example, a two-layered DVD having an 8.5 GB recording capacity has been available in correspondence to a single-layered DVD having a 4.7 GB recording capacity, and a two-layered Blue-ray disc (hereinafter, referred to as BD) having a 50 GB recording capacity has also been available in correspondence to a single-layered BD having a 25 GB recording capacity.

Further, the two-layered DVD and BD are available for both a reproduction-only ROM disc and a recordable disc (hereinafter, referred to as R disc). The two-layered BD is available even for a rewritable disc (hereinafter, referred to as RE disc).

Furthermore, JP-A-2006-252771 has been opened to the public as a document in relation to another multilayer optical disc. In this document, claim 1 states that "a multilayer optical disc having a structure such that the converging light beam transmits through one side of the first and second recording layers to retrieve the other side of the first and second recording layers," and also states that "a reproduction-only area, in which non-erasable information is recorded as a pit string on the first recording layer, is provided on an inner periphery of the multilayer optical disk, and another area except for the reproduction-only area is set to a first recording area to which information can be written by the converging light beam."

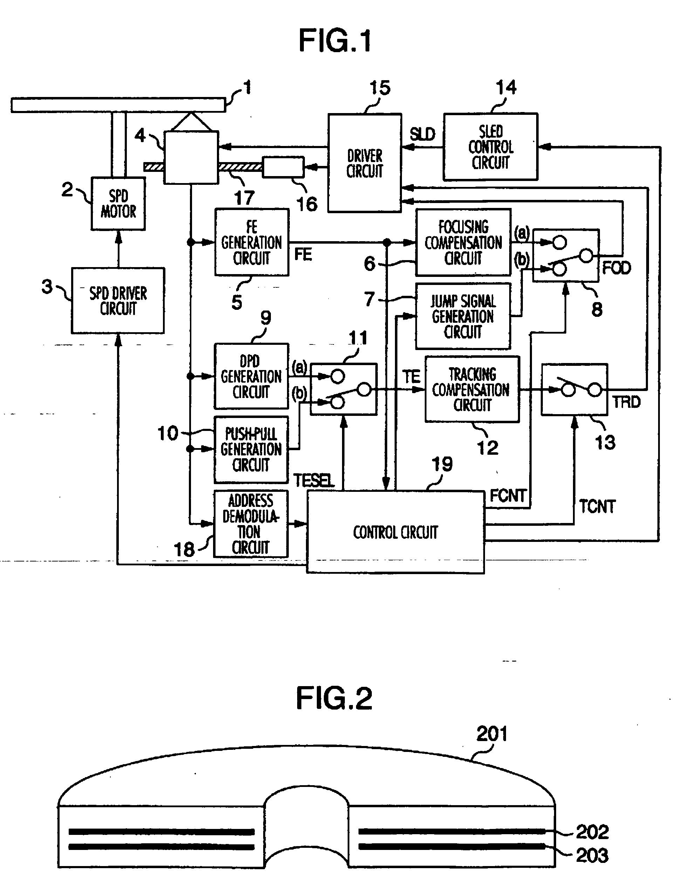

In the JP-A-2006-252771, the first recording layer has a recordable area other than the reproduction-only area, however, it is possible to employ a structure such that the first recording layer is the reproduction-only area alone. The above-mentioned example is shown in Fig. 2.

Fig. 2 is a cross section schematic diagram of the multilayer optical disc. In Fig. 2, an optical disc 201 is configured to have a first recording layer 202 of the reproduction-only area and a second recording layer 203 of the recordable area. Presently, the multilayer optical disc having the structure shown in Fig. 2 has not been turned into practical use, but it can sufficiently and technically be realized in consideration of a current condition where the two-layered ROM disc, R disc and RE disc are already turned into the practical use. In addition, the laser light used for reproducing and recording data is incident from the second recording layer 203.

Hereinafter, a problem will be described with a case of performing a seek operation involved with a focus jump in the multilayer optical disc in Fig. 2.

When the focus jump is performed, it is required that an optical disc apparatus reads out address information from the optical disc to check layer information contained in the address information so that it is confirmed whether the focus jump is applied correctly. Data is recorded with concavity and convexity pits on the first recording layer 202 as a reproduction-only, and a pit string forms a track. The second recording layer 203 of the recordable area also forms a track by a so-called land/groove structure. Further, the track has a wobbling structure which is meandered through the track.

In addition, in the case of the first recording layer 202, the address information is contained in the data configured by a pit group. In the case of the second recording layer 203, the address information is recorded in the wobbling by a phase modulation. To this end, it is required that a tracking servo control is performed to read out the address information, and a laser spot follows the track to read out the information.

When the track is formed by the pit string, it has been known generally that a known DPD (differential Phase Detection) method is suitable as a generation method for a tracking error signal (hereinafter, referred to as TE signal). In contrast, when the track is formed by a land/groove structure, it has also been known that a push-pull method, which obtains a signal in response to a tracking error amount even though the recording layer is a non-recorded state, is suitable as the generation method for the TE signal. Hereinafter, the TE signal generated by the DPD method is referred to as a DPD signal, and the TE signal generated by the push-pull method is referred to as a push-pull signal.

When the focus jump is applied from a condition of performing a tracking servo control with use of the DPD signal in the first recording layer 202 to the second recording layer 203, the tracking servo control can be performed without problem since the DPD signal can be generated correctly in response to a presence or absence of a recorded mark when a landing position on the second recording layer 203 is an already-recorded portion. In contrast, when the landing position is a non-recorded portion, the DPD signal cannot be generated correctly since the recorded mark is not present. To this end, the tracking servo control cannot be performed.

Further, when the focus jump is applied from a condition where the tracking servo control is performed with use of the push-pull signal in the second recording layer 203 to the first recording layer 202, the push-pull signal cannot be generated accurately on the first recording layer 202. This is because the amplitude of the push-pull signal depends on the height of pit. Normally, the pit height has been designed such that the amplitude of a reproduced signal of the data can be obtained more than a predetermined value, and that height is different from a height of which the amplitude of push-pull signal becomes maximum. In consequence, the push-pull signal is lowered than the ideal maximum amplitude, therefore, a noise is increased when amplifying the amplitude of push-pull signal by using a preamplifier and the like so as to obtain the predetermined value or more, and the quality of push-pull signal becomes deteriorated. To this end, the tracking servo control cannot be performed in high accuracy.

In the case of the existing focus jump method, as described above, it cannot be confirmed whether the focus jump is performed correctly since the tracking servo control is performed to not be able to read out the address information after performing the focus jump.

In order to solve the above-mentioned problem, the focus servo is decoupled once when switching over the recording layer to which tracking servo control is applied, and the generation method for the TE signal is switched over to a method suitable to a target layer to then couple the focus servo to the target layer once again, thereafter, the tracking servo control may be restarted. However, this method takes a long period of time to switch over the recording layer, therefore, a seek time period is increased.

EP 1 884 941 A1 aims to provide an information reproducing/recording device capable of enhancing the reliability of a focus jump. In the information reproducing/recording device in which the laser light emitted from a laser light source of an optical pickup is collected by an objective lens, irradiated on a multi-layered optical recording medium, and reflected by the multi-layered optical recording medium so as to be received by a light detector to be converted to an electrical signal, so that a focusing error signal and a tracking error signal are detected by the electrical signal in a signal processing circuit and focusing servo and tracking servo are executed based on the respective signal to reproduce or record information, the power of the laser light emitted from the laser light source is raised (S3); with the focusing and tracking servo turned OFF when reproduction of information and the like with respect to one of the recording layers of the multi-layered optical recording medium is finished to execute focus jump while optimally maintaining the amplitude of the focusing error signal.

According to EP 1 496 509 A2, an optical recording medium includes a first information substrate selected from one including a first substrate and a read-only first recording layer containing a reflective film and having information pits, and one including a first substrate with guide grooves, a first recording layer containing an organic dye, and a first reflective layer arranged in this order; and a second information substrate including a second substrate with guide grooves, a second reflective layer, a second recording layer containing an organic dye, and an inorganic protective layer (6) in this order.; The first and second information substrates are bonded with the interposition of an optically transparent organic interlayer so that the first and second substrates each face outward, and information recorded on the first and second recording layers is reproduced by applying light from a surface of the first substrate.

An object of the invention is to provide a focus jump method and an optical disc apparatus that includes a multilayer optical disc having both a reproduction-only recording layer and a recording layer of the recordable area, present in the disc, therefore, an increase of time period can be constrained for performing the seek operation.

The above-mentioned object is achieved by the invention characterize in tha claims 1 and 9. Preferred embodiments of the invention are characterized in the sub-claims.

Further, the object can be achieved by switching over a generation method of a tracking error signal to either a first or second generation method in response to the target layer to which a focus jump is applied, for a time period during which a tracking servo loop is opened in association with the focus jump.

According to the invention, it is possible to provide the focus jump method and optical disc apparatus since the apparatus has the multilayer optical disc having both the reproduction-only recording layer and recording layer of the recordable area in the disc to thereby constrain the increase of seek operation.

The other objects, features and advantages of the invention will become apparent from the following description of the embodiments of the invention taken in conjunction with the accompanying drawings.
Fig.1 is a schematic diagram showing an optical disc apparatus in a first embodiment of the invention;
Fig. 2 is a cross section schematic diagram showing a multilayer optical disc;
Fig. 3A is a waveform schematic diagram showing a DPD signal;
Fig. 3B is a waveform schematic diagram showing a push-pull signal;
Fig. 4 is a flowchart showing an operation in the first embodiment;
Fig. 5 is a waveform schematic diagram for explaining the first embodiment;
Fig. 6 is another waveform schematic diagram for explaining the first embodiment;
Fig. 7 is a configuration schematic diagram showing an optical disc apparatus in a second embodiment of the invention;
Fig. 8 is a flowchart showing an operation of the second embodiment;
Fig. 9 is a waveform schematic diagram for explaining the second embodiment; and
Fig.10 is another waveform schematic diagram for explaining the second embodiment.

### Embodiment 1

Fig.1 is a configuration schematic diagram showing an optical disc apparatus in a first embodiment.

Reference numeral 1 denotes an optical disc or the multilayer optical disc already shown in Fig. 2. In addition, both the first recording layer 202 (already described in Fig. 2) as a reproduction-only layer and the second recording layer 203 (already described in Fig. 2) of the recordable area, can be reproduced and recorded by the same wavelength laser light, respectively. A data recording method uses the same format for both the recording layers 202, 203. That is, the first and second recording layers 202, 203 are conformed to the same DVD format or BD format, for example. The second recording layer 203 of the recordable area, may also be either recordable or recordable. The optical disc 1 also corresponds to a so-called Intra-Hybrid.

Reference numeral 2 denotes a spindle motor for rotating the optical disc 1 in response to an output signal from a spindle driver circuit.

Reference numeral 3 denotes the spindle driver circuit for outputting a drive signal to rotate the spindle motor 2 on the basis of a spindle drive signal output from a control circuit 19.

Reference numeral 4 denotes an optical pickup providing an optical component, such as a semiconductor laser, an objective lens, etc. for irradiating a laser light on the optical disc 1 to record and reproduce information. The optical pickup 4 also provides a plurality of optical detectors to output an electric signal in response to a reflected light from the optical disc 1. It is configured that the optical pickup 4 further provides a focusing actuator and a tracking actuator (both not shown) to be able to drive the objective lens. In addition, the focusing actuator moves the objective lens in a focusing direction, that is, moves the objective lens in a substantially perpendicular direction with respect to the respective recording surfaces of the optical disc 1. Further, the tracking actuator moves the objective lens in a substantially radial direction of the optical disc 1.

Reference numeral 5 denotes a focusing error signal generation circuit for computing an output signal from the optical pickup 4 by using a known astigmatic method to output a focusing error signal (hereinafter, referred to as FE signal) which varies in response to a focusing error amount.

Reference numeral 6 denotes a focusing compensation circuit for outputting a signal which is compensated for a phase and a gain so that a stability and a follow-up capability of a focusing servo are improved in relation to the FE signal.

Reference numeral 7 denotes a jump signal generation circuit for generating and outputting a jump signal required for performing a focus jump in response to a control signal supplied from the control circuit 19.

Reference numeral 8 denotes a switching circuit in which an output signal from the focusing compensation circuit 6 is supplied to an input terminal (a) and the jump signal from the jump signal generation circuit 7 is supplied to an input terminal (b). Further, the switching circuit 8 is controlled by a control signal FCNT supplied from the control circuit 19 to be switched over to the input terminal (a) when the control signal FCNT is set to a Low output. In contrast, the switching circuit 8 is switched over to the input terminal (b) when the control signal FCNT is set to a Hi output. The output signal from the switching circuit 8 is a drive signal to be used for the focusing servo, and the drive signal is hereinafter referred to as a FOD signal.

Reference numeral 9 denotes a DPD generation circuit for generating the output signal from the optical pickup 4 by using a known DPD method to output a DPD signal which varies in response to a tracking error amount. The DPD generation circuit 9 also incorporates a gain circuit (not shown). The gain circuit is also set previously to such that the amplitude of DPD signal is varied to make a tracking servo loop gain into a predetermined characteristic.

Reference numeral 10 denote a push-pull generation circuit for generating the output signal from the optical pickup 4 by using a known push-pull method to output a push-pull signal which varies in response to the tracking error amount. The push-pull generation circuit 10 also incorporates a gain circuit (not shown), and the gain circuit is also set previously to such that the amplitude of push-pull signal is varied to make the tracking servo loop gain into a predetermined characteristic.

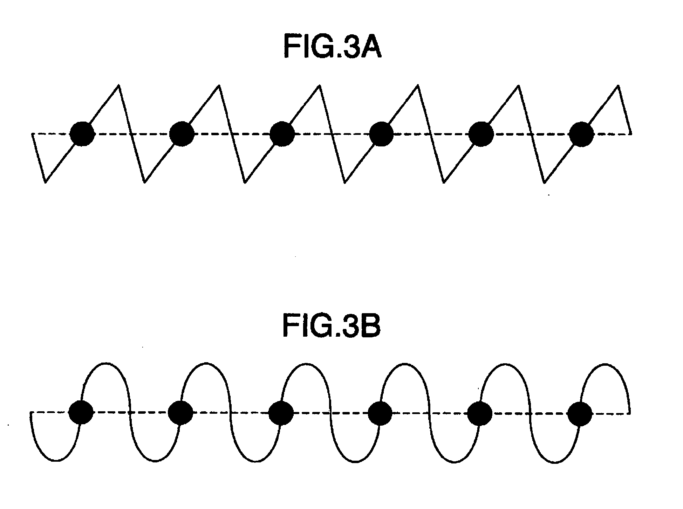

Figs. 3A and 3B are waveform schematic diagrams showing the DPD signal and push-pull signal, respectively. The following description will be concerned with these signals when a laser spot to be performed for the record/reproduction traverses a track of the recording layer on the optical disc 1.

Specifically, Fig. 3A is a waveform example of the DPD signal when the laser spot traverses the track of the reproduction-only first recording layer 202, and this signal shows a saw-tooth waveform signal. Fig. 3B is a waveform example of the push-pull signal when the laser spot traverses the track of the second recording layer 203 of the recordable area, and this signal shows a substantially sine waveform signal. A position indicated by a filled circle on both the waveforms indicates that the laser spot is located just on the track.

Referring back to Fig.1, the following description will be concerned with a configuration of the optical disc apparatus.

A reference numeral 11 denotes a switching circuit in which the DPD signal is supplied to an input terminal (a) and the push-pull signal is supplied to an input terminal (b). The switching circuit 11 is also controlled by a control signal TESEL supplied from the control circuit 19 to be switched over to the input terminal (a) when the control signal TESEL is set to the Low output. In contrast, the switching circuit 11 is switched over to the input terminal (b) when the control signal TESEL is set to the Hi output. In addition, an output from the switching circuit 11 indicates a TE signal.

A reference numeral 12 denotes a tracking compensation circuit for outputting a signal which is compensated for a phase and gain so that the stability and follow-up capability of a tracking servo are improved in relation to the TE signal.

A reference numeral 13 denotes a switch for operating on and off by a control signal TCNT supplied from the control circuit 19. The switch 13 becomes on-state, when the control signal TCNT is set to the Hi output, to output a signal supplied from the Jacking compensation circuit 12. In contrast, the switch 13 becomes off-state, when the control signal TCNT is set to the Low output, to output a reference potential. At this time, the position of objective lens in a tracking direction becomes a middle position to make a tracking servo control off. In addition, the output from switch 13 indicates a tracking drive signal (hereinafter, referred to as TRD signal).

A reference numeral 14 denotes a sled control circuit for outputting a sled drive signal (hereinafter, referred to as SLD signal) in response to an instruction from the control circuit 19.

A reference numeral 15 denotes a driver circuit for amplifying the FOD signal and TRD signal to then be supplied respectively to the focusing actuator and tracking actuator in the optical pickup 4. The driver circuit 15 also supplies an amplified signal of the SLD signal to a sled motor.

A reference numeral 16 denotes a sled motor 16 for rotating in response to the amplified signal of the SLD signal by the driver circuit 15.

A reference numeral 17 denotes a lead screw, one end of which is coupled to the sled motor 16, to be rotated by the sled motor 16. Further, it is configured that the optical pickup 4 moves in the radial direction of optical disc 1 when rotating the lead screw 17.

A reference numeral 18 denotes an address demodulation circuit for demodulating address information on the optical disc 1 by using the output signal of the optical pickup 4 to then output itself. In the case of the reproduction-only first recording layer 202, the address demodulation circuit 18 demodulates the address information contained in data configured by a pit group to then output itself. In contrast, in the case of the second recording layer 203 of the recordable area, the address demodulation circuit 18 demodulates the address information contained in phase modulation information on a wobbling to then output itself.

The control circuit 19 controls the optical disc apparatus entirely. The control circuit 19 receives the FE signal and the address information output from the address demodulation circuit 18, and also outputs a spindle drive signal, the control signal FCNT for controlling the switching circuit 8, the control signal TESEL for controlling the switching circuit 11, and the control signal TCNT for controlling the switch 13. In addition, the control circuit 19 may be of a generally used CPU.

In the above-mentioned apparatus, the tracking compensation circuit 12, switch 13 and driver circuit 15 function as a tracking servo control unit for controlling the tracking servo, for example. The control circuit 19 also functions a switching unit for making the tracking servo control unit on and off. Further, in the above-mentioned apparatus, the DPD generation circuit 9, push-pull generation circuit 10, switching circuit 11 and control circuit 19 function as a tracking error signal generation unit, for example.

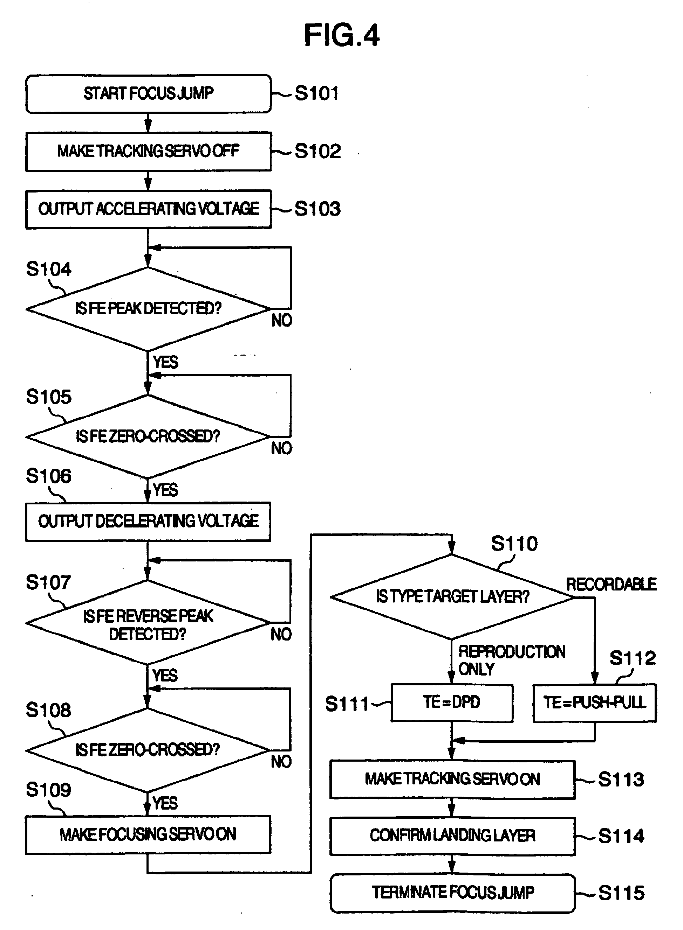

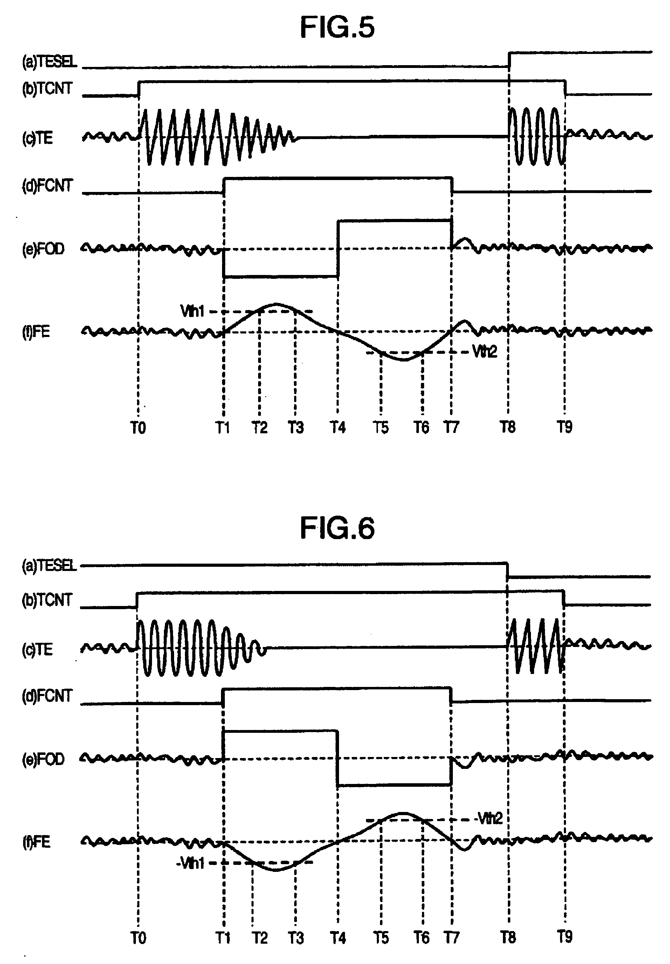

Next, an operation of the focus jump provided in the above-mentioned optical disc apparatus will be described with reference to a flowchart in Fig. 4 and a waveform diagram in Fig. 5.

In addition, the focus jump means an operation on a process of a layer to-layer jump, that is, it means that a focus position of a light irradiated from the optical pickup 4 is moved from one recording layer to the other. Further, the layer-to-layer jump means an operation in such that the recording layer is altered for the record or reproduction of the optical disc 1.

The optical disc apparatus before applying the focus jump is assumed to set a condition where the optical disc 1 rotates and the focusing servo control and tracking servo control are being operated in the reproduction-only first recording layer 202. That is, the control signal FCNT output from the control circuit 19 is set to the Low output, the switching circuit 8 is connected to the input terminal (a) to output the output signal, as the FOD signal, of the focusing compensation circuit 6, and the focusing servo loop indicates a condition where it is closed. Further, the control signal TCNT output from the control circuit 19 is set to the Low output, the switch 13 closes to output the output signal, as the TRD signal, of the tracking compensation circuit 12, and the tracking servo loop indicates a condition where it is closed. Furthermore, the control signal TESEL output from the control circuit 19 is set to the Low output, and the switching circuit 11 outputs the DPD signal, as the TE signal, to be supplied to the input terminal (a).

In addition, what the focusing servo loop is closed means that a focusing error signal is made closer to a zero-cross point on a S-shaped signal. This operation can also be rephrased to such that the focusing servo control is simply performed. Conversely, it can be rephrased to such that, what the focusing servo loop is opened means that the focusing servo control is made stopped.

In the above-mentioned condition, the focus jump starts toward the second recording layer 203 of the recordable area, at a step S101. The control circuit 19 makes the switch 13 off at a time TO in Fig. 5 as the control signal TCNT is set to the Hi output, and the tracking servo loop is then opened. To this end, the tracking servo control is made off, at a step S102, and the TE signal indicated by (c) in Fig. 5 is made into a DPD signal waveform of the saw-tooth waveform from the time T0.

In addition, it can be rephrased to such that, what the tracking servo loop is opened means that the tracking servo control is made stopped, and what the tracking servo loop is closed means that the tracking servo control is performed. It can also be rephrased to such that, what the tracking servo loop is closed means that it can be controlled such that the tracking error signal is made close to the zero-cross point on the S-shaped signal. In addition, the zero-cross point of the tracking error signal appears respectively at a positive polarity and a negative polarity on an inclination of the S-shaped signal. In this case, the zero-cross point indicates a zero-cross point on a polarity where the tracking servo control is made into a negative feedback control.

Next, at a time T1 in Fig. 5, the control circuit 19 makes the switching circuit 8 connected to the input terminal (b) to open the focusing servo loop as the control signal FCNT is set to the Hi output. At the same time, the control circuit 19 outputs an instruction to the jump signal generation circuit 7 at the time T1, to then output an accelerating voltage to be required for the focus jump to the FOD signal indicated by (e), at a step S103. The objective lens provided on the optical pickup 4 is accelerated by the accelerating voltage to then start to move, and the laser spot moves away from the first recording layer to make the amplitude of the DPD signal or TE signal indicated by (c) small. Further, a known S-shaped waveform appears on the FE signal indicated by (f) in Fig. 5 in response to a moving amount of the objective lens.

The control circuit 19 outputs the accelerating voltage to monitor the FE signal indicated by (f) and detect whether the FE signal reaches a peak level, at a step S104. At the step S104, if the peak level is detected (or Yes), the process at the step S104 is terminated. In contrast, if the peak level is not detected (or No), the monitoring for the FE signal indicated by (f) continues after returning the process to the step S104. In a peak detection method, it is determined that the peak is detected at a time T3 at which the FE signal indicated by (f) is lower than a detection level Vth1 in Fig. 5 after the FE signal indicated by (f) is higher than the detection level Vth1 at a time T2, as an example. In addition, the "peak level" in this embodiment is not necessarily limited to the level at which the FE signal indicated by (f) becomes maximum. For example, the peak level may be a value which becomes a relative maximum, among measured values. The peak level also includes an error range of a predetermined amount, for example, the error range of 1%.

At the step S104, if the peak is detected (or Yes), the control circuit 19 monitors the FE signal indicated by (f) to detect whether it is made zero-crossed, at a step S105. If the FE signal indicated by (f) is made zero-crossed (or Yes), the process at the step S105 is terminated. In contrast, if the FE signal is not made zero-crossed (or No), the monitoring for the FE signal indicated by (f) continues after returning the process to the step S105. In Fig. 5, the FE signal indicated by (f) is made zero-crossed at a time T4.

Further, if the zero-cross is detected at the step S104 (or Yes), the control circuit 19 outputs the instruction to the jump signal generation circuit 7 to output a decelerating voltage to be required for decelerating the objective lens at a step S106. In Fig. 5, the decelerating voltage is output to the FOD signal indicated by (e) at a time T4.

The control circuit 19 outputs the decelerating voltage to then monitor the FE signal indicated by (f) and detect whether the FE signal becomes the peak level having a polarity opposite of that detected at the step S104, at a step S147. At the step S107, if the peak is detected (or Yes), the process at the step S107 is terminated. In contrast, if the peak is not detected (or No), the process returns to the step S107 to continue to monitor the FE signal indicated by (f). In the peak detection method, it is determined that the peak of the reverse polarity is detected at a time T6 at which the FE signal indicated by (f) is higher than a detection level Vth2 in Fig. 5 after the FE signal indicated by (f) is lower than the detection level Vth2 at a time T5, as an example.

If the peak of the reverse polarity is detected (or Yes) at the step S107, the control circuit 19 monitors the FE signal indicated by (f) to detect whether the FE signal is made zero-crossed, at a step S108. If the FE signal indicated by (f) is made zero-crossed (or Yes), the process at the step S108 is terminated. In contrast, the FE signal is not made zero-crossed, the process returns to the step S108 to continue to monitor the FE signal indicated by (f). In Fig. 5, the FE signal indicated by (f) is made zero-crossed at a time T7.

If the zero-cross is detected at the step S108 (or Yes), the control circuit 19 makes the switching circuit 8 switched over to the input terminal (a) as the control signal FCNT is set to the Low output. In consequence, the switching circuit 8 outputs an output signal, as the FOD signal, of the focusing compensation circuit 6, therefore, the focusing servo loop is closed to thereby make the focusing servo on, at a step S109.

After the focusing servo is made on at the step S109, the control circuit 19 determines a type of a target layer to which the focus jump is applied, at a step S110. At this step S110, when the target layer to which the focus jump is applied is the reproduction only recording layer 202, the control circuit 19 makes the DPD signal to be supplied to the input terminal (a) of the switching circuit 11 into the TE signal as the control signal TESEL is set to the Low output, at a step S111. In contrast, when the target layer to which the focus jump is applied is the recording layer 203 of the recordable area, the control circuit 19 makes the push-pull signal to be supplied to the input terminal (b) of the switching circuit 11 into the TE signal as the control signal TESEL is set to the Hi output, at a step S112.

In addition, the target layer to which the focus jump is applied is the second recording layer 203 of the recordable area, in this embodiment. Therefore, the TESEL signal indicated by (a) is set to the Hi output at a time T8 in Fig. 5, and the push-pull signal is selected as the TE signal. To this end, the TE signal indicated by (c) in Fig. 5 becomes the push-pull signal having a substantially sine waveform from the time T8.

Thereafter, at a time T9 in Fig. 5, the control circuit 19 makes the switch 13 on as the control signal TCNT is set to the Low output. In consequence, since the output signal of tracking compensation circuit 12 is output as the TRD signal, the tracking servo loop is closed to make the tracking servo on, at a step S113.

After the tracking servo loop is closed at the step S113, the address demodulation circuit 18 becomes a state such that the address information on the optical disc 1 can be output. Thus, the control circuit 19 obtains the address information from the address demodulation circuit 18 to check layer information contained in the address information to confirm and detect whether a landing layer, which operates the focusing servo control, is the target layer to which the focus jump is applied, at a step S114. As a result of the confirmation at the step S114, if the landing layer is not the target layer, it is desirable to perform a predetermined error process (which is not described in this embodiment). In contrast, as a result of the confirmation, the focus jump process is terminated if the landing is performed correctly on the targeted recording layer, at a step S115.

In the above-mentioned embodiment, the focus jump has been described with the case where it is applied from the reproduction-only recording layer 202 to the recording layer 203 of the recordable area. In the case where the direction of focusing direction is reverse, that is, when the focus jump is applied from the recording layer 203 of the recordable area, to the reproduction-only recording layer 202, the above-mentioned embodiment is also applicable thereto.

Fig. 6 is a waveform diagram showing the case where the focus jump is applied neversely.

In an operation shown in Fig. 6, the optical disc apparatus before applying the focus jump is assumed to set a condition where the optical disc 1 rotates and the focusing servo control and tracking servo control are being operated on the second recording layer 203 of the recordable area. That is, the control signal FCNT output from the control circuit 19 is set to the Low output, the switching circuit 8 is connected to the input terminal (a) to output the output signal, as the FOD signal, of the focusing compensation circuit 6, and the focus servo loop indicates a condition where it is closed. Further, the control signal TCNT output from the control circuit 19 is set to the Low output, the switch 13 is closed to output the output signal, as the TRD signal, of the tracking compensation circuit 12, and the tracking servo loop indicates a condition where it is closed. In other words, the condition indicates that the tracking servo control is being performed. Furthermore, the control signal TESEL output from the control circuit 19 is set to the Hi output, and the switching circuit 11 outputs the push-pull signal, as the TE signal, to be supplied to the input terminal (b).

In Fig. 6, the control circuit 19 makes the tracking servo off at the time T0, at the step S102, to thereby make the TE signal indicated by (c) into the push-pull signal of the substantially sine waveform. Further, the jump signal generation circuit 7 outputs the accelerating voltage of the reverse polarity against that shown in Fig. 5 at the time T1, at the step S103, to thereby make the FE signal indicated by (f) into the S-shaped waveform of the reverse polarity against Fig. 5.

In addition, in the peak detecting process at the step S104, it is desirable that the detection level uses a detection level -Vth1 of the reverse polarity against the detection level Vth1 shown in Fig. 5.

The jump signal generation circuit 7 also outputs the decelerating voltage of the reverse polarity against that shown in Fig. 5 at the time T4, at the step S106.

In a reverse peak detecting process at the step S107, it is desirable that the detection level uses a detection level -Vth2 of the reverse polarity against the detection level Vth2 shown in Fig. 5.

In the determination of the target layer type at the step S110, the control circuit 19 determines the reproduction-only recording layer 202 as the target layer, and the switching circuit 11 switches over the TE signal to the DPD signal at the time T8, at the step S111. To this end, the TE signal indicated by (c) is made into the DPD signal of the saw-tooth waveform at the time T8.

As described above, an aspect of the optical disc apparatus is that the generation method of the TE signal is switched over on a time period during which the tracking servo loop is opened in association with the focus jump. To this end, even when the focus jump is performed to then switch over the recording layer to which the tracking servo control is applied, the address information can be obtained by restarting the tracking servo control rapidly. Thus, it is possible to perform the seek operation rapidly.

In addition, the first embodiment is not limited to the above-mentioned method.

For example, the switching operation of the TE signal at the steps S110, S111 and S112 may be performed at a different timing by the optical disc apparatus. That is, the switching operation of the generation method for the TE signal may be performed at an arbitrary timing by the optical disc apparatus if a time period is ranged from the time T0 to T9 during which the tracking servo loop is opened in association with the focus jump. For example, the loop operation for the peak detection at the steps S104 and S107 is performed by plural times in the optical disc apparatus, and the loop operation for the zero-cross detection of the FE signal at the steps S105 and 108 is also performed by plural times therein, therefore, the optical disc apparatus may be configured that the switching operation for the TE signal is performed on either the loop operation.

The optical disc apparatus may also be configured that the switching operation for the TE signal is performed in range of a time period from the time T1 at which the accelerating voltage is output, to the time T2 at which the FE signal indicated by (f) exceeds the detection level Vth1, or from the time T4 at which the decelerating voltage is output to the time T5 at which the FE signal indicated by (f) exceeds the detection level Vth2.

Further, the operation for making the tracking servo off at the step S102 and the output of the accelerating voltage at the step S103, may be performed at the same time or substantially the same time. That is, a variation timing of the TCNT signal indicated by (b) at the time T0 and the FCNT signal indicated by (d) and FOD signal indicated by (e) at the time T1, may be the same or substantially the same.

According to the above-mentioned optical disc apparatus, the seek operation can be performed rapidly on a multilayer optical disc having the reproduction-only recording layer 202 and the recording layer 203 of the recordable area on the optical disc 1. Particularly, it is remarkable to obtain an advantage from the multilayer optical disc having the reproduction-only recording layer 202 and the recording layer 203 of the recordable area, both of which are irradiated on the optical disc 1 by the laser light of the same wavelength.

### Embodiment 2

A second embodiment of the optical disc apparatus will be described below.

In a BD (Blue-ray Disc), it is generally known that a spherical aberration occurs in response to a variation of a so-called cover layer thickness which is a distance from the surface of disc to the recording layer. The spherical aberration occurs deteriorating a reproduction performance as well as a record performance. Therefore, the optical disc apparatus for recording/reproducing the BD is configured that a spherical aberration correcting mechanism is provided in the optical pickup. For this purpose, it is known that a spherical aberration correcting amount is appropriately set to the cover layer thickness, as a method. Further, various methods are publicly opened to set the spherical aberration correcting amount appropriately to the target layer to which the focus jump is applied in a two-layered BD. In the second embodiment, a focus jump method will be described with the case applicable to the BD having both the reproduction-only recording layer and the recording layer of the recordable area.

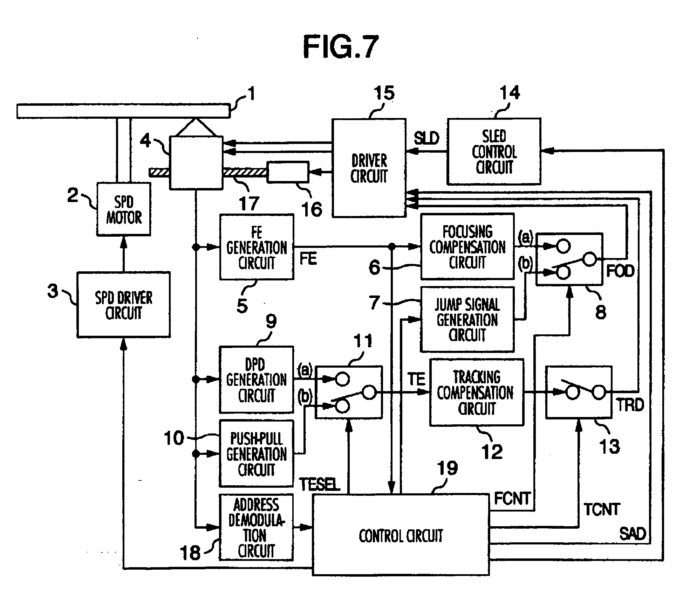

Fig. 7 is a schematic diagram showing a configuration of an optical disc apparatus in the second embodiment. The configuration of the optical disc apparatus in Fig. 7 different from the optical disc apparatus in Fig.1 described in the first embodiment is described below.

The control circuit 19 supplies a spherical aberration correcting drive signal SAD to the driver circuit 15. The driver circuit 15 amplifies the supplied spherical aberration correcting drive signal SAD to drive the spherical aberration correcting mechanism (not shown) in the optical pickup 4. The spherical aberration correcting mechanism in the optical pickup 4 corrects the spherical aberration in response to a drive signal supplied from the driver circuit 15. In addition, the configuration of spherical aberration correcting mechanism can be employed as a so-called beam expander mechanism combined with generally known concave lens and convex lens or a liquid crystal correcting mechanism using a liquid crystal element.

Other elements in Fig. 7 are the same as these shown in Fig. 1, therefore, the same elements are appended with the same reference numerals and omitted to these description.

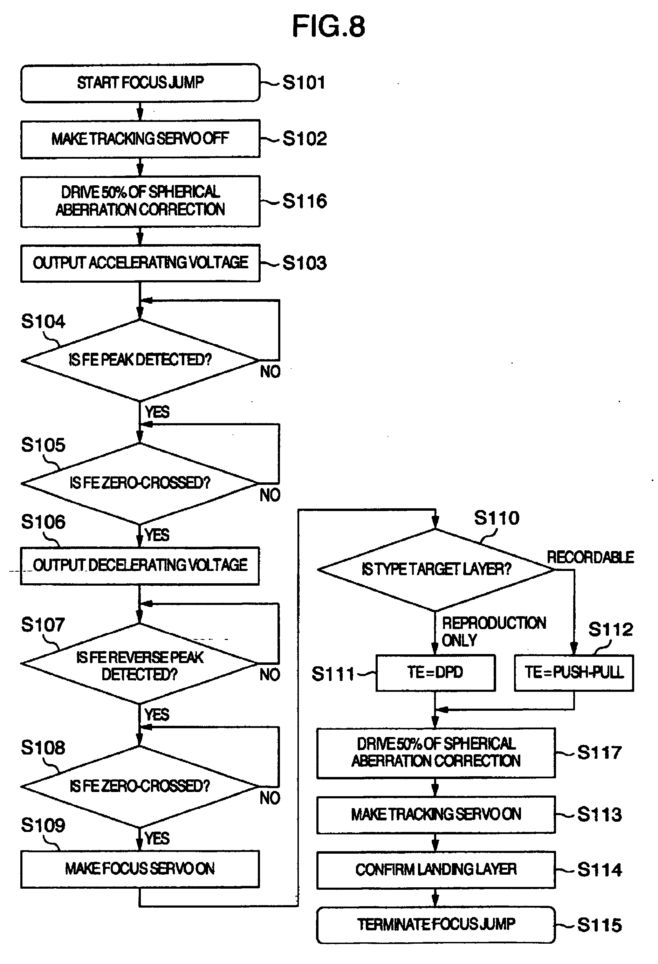

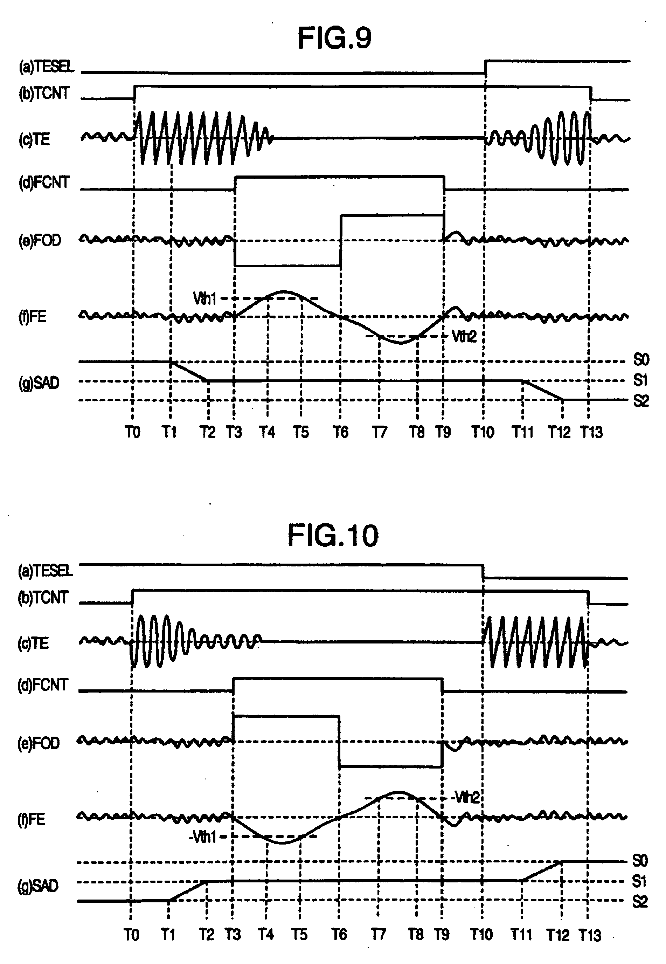

Next, in the above-mentioned configuration, an operation of the focus jump in the second embodiment will be described with reference to a flowchart in Fig. 8 and waveforms in Fig. 9.

There are two different points in the flowchart in Fig. 8 compared with that in Fig. 4 of the first embodiment. That is, the flowchart in Fig. 8 is different in that a drive process for a 50% spherical aberration correction at a step S116 is added after the process for making the tracking servo off at the step S102 and another drive process for the 50% spherical aberration correction at a step S117 is added before the process for making the tracking servo on at the step S113. The drive for the spherical aberration corrections will be described below.

In addition, in the existing two-layered BD, it is regulative that a distance from a disc surface to which the laser light is incident, to the recording layer on the side of the objective lens is set to 75 µm, likewise, a distance from one disc surface to the other recording layer is set to 100µm. Therefore, assuming that a physical specification for the respective layers of the multilayer optical disc in Fig. 2 is conformed to the BD specification, a distance from the disc surface to the second recording layer 203 of the recordable area is set to 75µm, likewise, a distance from the disc surface to the reproduction-only first recording layer 202 is set to 100µm. In consequence, a distance between the first recording layer 202 and the second recording layer 203 becomes 25µm, therefore, the spherical aberration correcting mechanism should correct the spherical aberration corresponding to 25µm in order to make the record/reproduction performance optimal. That is, the spherical aberration correcting amount to be optimal for the first recording layer 202 is different from that to be optimal for the second recording layer 203. Assuming that a difference between these correcting amounts is 100%, a 50% amount of the spherical aberration is corrected at the step S116, and another remaining 50% of that is corrected at the step S117.

In the operation shown in Fig. 8, the optical disc apparatus before applying the focus jump is assumed to set a condition where the optical disc 1 rotates and the focusing servo control and tracking servo control are being operated in the reproduction-only first recording layer 202. That is, the control signal FCNT output from the control circuit 19 is set to the Low output, the switching circuit 8 is connected to the input terminal (a) to output the output signal, as the FOD signal, of the focusing compensation circuit 6, and the focusing servo loop indicates a condition where it is closed. Further, the control signal TCNT output from the control circuit 19 is set to the Low output, the switch 13 closes to output the output signal, as the TRD signal, of the tracking compensation circuit 12, and the tracking servo loop indicates a condition where it is closed. Furthermore, the control signal TESEL output from the control circuit 19 is set to the Low output, and the switching circuit 11 outputs the DPD signal, as the TE signal, to be supplied to the input terminal (a). The spherical aberration correcting drive signal SAD (indicated by (g) in Fig. 9) output by the control circuit 19 is assumed to be a level S0 in Fig. 9, and the spherical aberration correcting amount in this condition is assumed to be optimal for the recording layer 202. In addition, a level S2 in Fig. 9 is assumed to be a condition where the spherical aberration correcting amount is optimal for the recording layer 203.

The focus jump starts at the step S101. The control circuit 19 makes the control signal TCNT into the Hi output at the time T0 in Fig. 9 to then make the tracking servo off, at the step S102. The control circuit 19 drives 50% of the spherical aberration correcting amount at the time T1 in Fig. 9, at the step S116. That is, the spherical aberration correcting drive signal SAD indicated by (g) varies from the time T1 and reaches a level S1 at the time T2 to then terminate the drive of the spherical aberration correction at that time point. Here, the level S1 is set to a middle level between the level S0 and a level S2. In fact, at the step S116, the spherical aberration is corrected by 50% of the entire amount thereof by varying the spherical aberration correcting drive signal SAD from the level S0 to S1.

Thereafter, the jump signal generation circuit 7 outputs the accelerating voltage required for the focus jump at the time T3, at the step S103. Likewise to the first embodiment, the process at steps S104 to S109 is performed, and the focusing servo loop is closed at the time T9. The process at the steps S110 to 112 is also performed to switch over the generation method of the TE signal. In this embodiment, the target layer to which the focus jump is applied is the second recording layer 203 of the recordable area, and the TE signal indicated by (c) is the push-pull signal at a time T10. In addition, at this time, the level of spherical aberration correcting drive signal SAD indicated by (g) is S1, and the level S1 is not optimal for the second recording layer 203. Therefore, the amplitude of TE signal indicated by (c) for which the push-pull signal is selected is small.

Further, the control circuit 19 drives the remaining 50% of the spherical aberration correction, at the step S117. That is, the spherical aberration correcting drive signal SAD indicated by (g) starts to vary from a time T11 to then reach the level S2 at a time T12. The amplitude of TE signal indicated by (c) becomes larger than that at the time T11 since the level S2 is optimal for the second recording layer 203 as described above.

Thereafter, the control circuit 19 performs the process for making the tracking servo on at the step S113 and the process for confirming the landing layer at the step S114, and the focus jump is then terminated at the step S115.

- In the above-mentioned embodiments, the focus jump has been described for the case where it is applied from the reproduction-only recording layer 202 to the recording layer 203 of the recordable area. In a reverse direction of the focus jump, it is also possible to apply the focus jump from the recording layer 203 of the recordable area, to the reproduction-only recording layer 202.

Fig.10 shows a waveform diagram for the above-mentioned case.

In an operation shown in Fig.10, the optical disc apparatus before applying the focus jump is assumed to set a condition where the optical disc 1 rotates and the focusing servo control and tracking servo control are being operated on the second recording layer 203 of the recordable area. That is, the control signal FCNT output from the control circuit 19 is set to the Low output, the switching circuit 8 is connected to the input terminal (a) to output the output signal, as the FOD signal, of the focusing compensation circuit 6, and the focusing servo loop indicates a condition where it is closed. Further, the control signal TCNT output from the control circuit 19 is set to the Low output, the switch 13 closes to output the output signal, as the TRD signal, of the tracking compensation circuit 12, and the tracking servo loop indicates a condition where it is closed. Furthermore, the control signal TESEL output from the control circuit 19 is set to the Low output, and the switching circuit 11 outputs the push-pull signal, as the TE signal, to be supplied to the input terminal (b). The spherical aberration correcting drive signal SAD (indicated by (g) in Fig. 10) output by the control circuit 19 is assumed to be the level S2 in Fig. 10, and the spherical aberration correcting amount in this condition is assumed to be optimal for the recording layer 203.

The tracking servo is made off at the time T0, at the step S102 to thereby make the TE signal indicated by (c) into a substantially sine waveform push-pull signal.

The control circuit 19 drives 50% of the spherical aberration correcting amount at the time T1 in Fig.10. That is, the control circuit 19 varies the spherical aberration correcting drive signal SAD indicated by (g) from the time T1. Thereafter, when the spherical aberration correcting drive signal SAD reaches the level S1 at the time T2, the control circuit 19 terminates the drive of the spherical aberration correction at that time point. Here, the level S1 is the middle level between the level S0 and S2, therefore, the spherical aberration is corrected by 50% of the entire amount thereof, at the step S116.

Thereafter, the optical disc apparatus outputs the accelerating voltage to be required for the focus jump of the reverse polarity against Fig. 9 at the time T3, at the step S103, the process at the subsequent steps S104 to S109 is performed, and the focusing servo loop is closed at the time T9. In addition, an S-shaped curve appeared on the FE signal indicated by (f) in association with the focus jump becomes a reverse polarity against the FE signal indicated by (f) in Fig. 9 since the direction of the focus jump in Fig.10 is reverse against that in Fig. 9.

Furthermore, the process at the steps S110 to S112 is performed to switch over the generation method for the TE signal. In the embodiment of Fig.10, the target layer for the focus jump is the reproduction-only first recorcling layer 202, and the DPD signal is output as the TE signal indicated by (c) at the time T10.

Furthermore, the control circuit 19 drives the remaining 50% of the spherical aberration correction at the step S117. That is, the spherical aberration correcting drive signal SAD indicated by (g) starts to vary from the time T11 and reaches the level S0 at the time T12.

Thereafter, the control circuit 19 performs the process for making the tracking servo on at the step S113 and the process for confirming the landing layer at the step S114 to then terminate the focus jump at the step S115.

As described above, an aspect of the optical disc apparatus is that the generation method of TE signal is switched over for the time period during which the tracking loop is opened in association with the focus jump, for example. To this end, the tracking servo control restarts rapidly to obtain the address information even when the focus jump is performed to then switch over the recording layer to which the tracking servo control is applied, so that it is possible to perform the seek operation rapidly.

In addition, the second embodiment is not limited to the above-mentioned method.

For example, the entire drive amount (100%) of the spherical aberration correction is divided into a 50%-to-50% ratio at the steps S116, S117 in Fig. 8, but it may be divided into a 30%-to-70% ratio, as a divided ratio. The process at the step S116 may be omitted to be set to a 0%-to-100% ratio if the focusing servo control is not deviated from the process. Conversely, the process at the step S117 may be omitted to then be set to a 100%-to-0% ratio. That is, the ratio can be changed arbitrarily in range where the accuracy of the focus jump can be maintained.

Further, the switching operation of TE signal performed at the steps S110, S111 and S112 may be performed at other timings. That is, the optical disc apparatus may perform the switching operation of the generation method for TE signal at an arbitrary timing if the timing is within a time period from the time T0 to time T13 during which the tracking servo loop is opened in association with the focus jump. For example, the optical disc apparatus may be configured to perform the switching operation of TE signal on the loop operation of the peak detecting operation at the steps S104, S107 and the FE signal zero-cross detecting operation at the steps S105, S108, as described in the first embodiment. The optical disc apparatus may also be configured to perform the switching operation of TE signal at a time period from the time T3 at which the accelerating voltage is output, to the time T4 at which the FE signal indicated by (f) exceeds the detection level Vth1 or a time period from the time T6 at which the decelerating voltage is output, to the time T7 at which the FE signal indicated by (f) exceeds the detection level Vth2.

Alternatively, the optical disc apparatus may be configured to perform the switching operation of TE signal for a vicinity of a time period, for a time period from the time T0 to T1, for a time period from the time T2 to T3, or for a time period from the time T12 to T13, during which the spherical aberration correcting drive signal SAD is varied.

Furthermore, the optical disc apparatus may be configured to perform the switching operation of TE signal in parallel with the variation of the spherical aberration correcting drive signal SAD for the time period during which the spherical aberration correcting drive signal SAD is varied, that is, the time period from the time T1 to T2, or the time period from the time T11 to T12. In fact, the optical apparatus may be configured to overlap the time period of performing the switching operation for the time period during which the spherical aberration correcting drive signal SAD is varied. The optical disc apparatus may also be configured to overlap the time period during which the switching operation is performed, the time period during which the spherical aberration correcting drive signal SAD is varied and the time period during which the objective lens is driven in the focus direction. In consequence, an entire processing time can be shortened more.

In addition, the spherical aberration correcting drive signal SAD is set to the level signal in Fig. 10 and Fig. 11, which is for sake of simplicity in the description, however, the spherical aberration correcting drive signal SAD is set to a pulse-shaped signal when using the stepping motor as a drive mechanism for the spherical aberration correction.

The FOD signal indicated by (e) in Figs. 5, 6 and Figs. 9, 10 is set to a signal output as a binary level of the accelerating voltage and decelerating voltage for the time period during which the focus servo loop is opened. However, this waveform is not limited to the embodiment, and a voltage for applying a uniform motion to the objective lens may be output for a time period during which the accelerating voltage is switched over to the decelerating voltage. For example, for a time period from the time T5 at which the peak of the FE signal indicated by (f) is detected at the step S104 to the time T7 at which the FE signal indicated by (f) first exceeds the detection level Vth2 in the reverse peak detection at the step S107, the FOD signal indicated by (e) is set to a middle point voltage for example to then apply the uniform motion to the objective lens for that time period.

According to the above-mentioned optical disc apparatus in the second embodiment, since the optical disc apparatus provides the configuration to correct a part at a time for the spherical aberration, the tracking servo control applies to both the layer before applying the focus jump thereto and the target layer when performing the focus jump, so that it is possible to obtain the tracking error signal having a sufficient amplitude. In consequence, it is possible to constrain an increase of a processing time period in association with the focus jump.

In addition, the multilayer optical disc in relation to the invention is not limited to the configuration shown in Fig. 2. A reverse layer configuration may be acceptable in comparison to the configuration shown in Fig. 2. That is, it is needless to say that, one recording layer close to the objective lens is the reproduction-only recording layer and the other recording layer is the recording layer of the recordable area in the multilayer optical disc, which is also applicable to the embodiments as described above.

Further, the multilayer optical disc described in the embodiment of Fig. 2 is the two-layered structure optical disc. However, the number of layers is not limited to the two-layered. The multilayer optical disc having the two or more layers such as three or four layers, are applicable to the embodiments as described above.

And also, the recording layer 203 of the rewritable area is applicable.

The optical system in the optical disc apparatus used for the invention and the generation method of the servo error signal are not limited to the description in the embodiments. For example, a known knife-edge method etc, may be used as the generation method of FE signal. The generation method of TE signal for the recording layer 203 of the recordable area, may be acceptable any methods if the method can obtain the TE signal in response to the tracking error amount even in a non-recorded portion of the optical disc. For example, a known DPP (Differential Push Pull) method etc. may be used.

In addition, the DPD generation circuit 9 and push-pull generation circuit 10 in the embodiments are configured to respectively have the gain circuit, however, the setting of gain circuit may also be changed as common to the gain circuits when switching over the generation method of TE signal.

In the case of a disc having a first recording or reproducing layer and a second recording or reproducing layer each having a different physical specification, the invention is applicable to even the case where the tracking error generation method, which can obtain a larger TE signal by the optical disc apparatus, is different for the respective layers as a first and second generation method. In this case, the first layer may be either the recording layer of the recordable area or the reproduction-only recording layer, and the second layer may also be either the recording layer of the recordable area or the reproduction-only recording layer.

Besides, the invention is not limited to the above-mentioned embodiments, but includes various examples. For example, the above-mentioned embodiments are described in detail for explaining the invention to understand easily, and all of the configurations are not necessarily limited to the invention. Further, one of the configurations in an embodiment can be replaced with the other in the other embodiment, and one of the configurations in an embodiment can be added to the other in the other embodiment. One of the configurations in the respective embodiments can also be added to, deleted from or replaced with the other configuration.

Even though a part or entire of the above-mentioned configurations may be configured by the hardware, it may be configured so as to be achieved by executing programs in a processor. Further, a control line and information line are indicated as required for the explanation, but all of the control line and information line are not necessarily indicated on products. Practically, it may be considered that almost all configurations are connected mutually.

It should be further understood by those skilled in the art that although the foregoing description has been made on embodiments of the invention, the invention is not limited thereto and various changes and modifications may be made without departing from the scope of the appended claims.

## Claims

1. A focus jump method for an optical disc apparatus which reproduces from and records in an optical disc (1, 201) providing at least one layer for each of a first recording layer (202) of a reproduction-only and a second recording layer (203) of the recordable area, wherein a focus jump is performed between the first recording layer and the second recording layer,
**characterized in that**
when a focus jump is performed between the first recording layer and the second recording layer, a generation method of a tracking error signal (TE) is switched over to a first generation method or a second generation method different from the first generation method for a time period during which a tracking servo control is stopped in association with the focus jump,
that the generation method of the tracking error signal (TE) is switched over to the first generation method when a target layer of the focus jump is the first recording layer (202), and to the second generation method when the target layer of the focus jump is the second recording layer (203).

2. The method according to claim 1 **characterized in that** the optical disc (201) includes a multilayer optical disc (201) providing at least one layer for each of the first recording layer (202) of the reproduction-only and the second recording layer (203) of the recordable area, to record and reproduce by a same wavelength laser light.

3. The method according to claim 1 **characterized in that** the generation method of the tracking error signal (TE) is switched over to the first generation method or the second generation method for the time period during which the tracking servo control is stopped in association with the focus jump, and a time period during which a focusing drive signal is output for applying one of an accelerating motion, a uniform motion or a decelerating motion to a focusing actuator (4).

4. The method according to claim 1 **characterized in that** the generation method of the tracking error signal (TE) is switched over to the first generation method or the second generation method for the time period during which the tracking servo control is stopped in association with the focus jump and before or after performing a spherical aberration correction.

5. The method according to claim 1 **characterized in that** when the focus jump is performed between the first recording layer (202) and the second recording layer (203), the generation method of the tracking error signal (TE) is switched over to the first generation method or the second generation method for the time period during which the tracking servo control is stopped in association with the focus jump and a spherical aberration is corrected.

6. The method according to claim 1 **characterized in that** the generation method of the tracking error signal (TE) is switched over to the first generation method when a layer being focused before performing the focus jump is the second recording layer (203) and a target layer of the focus jump is the first recording layer (202), and to the second generation method when the layer being focused before performing the focus jump is the second recording layer (203) and the target layer of the focus jump is the second recording layer (203).

7. The method according to any one of the claims 1 to 6, **characterized in that** the first generation method is a DPD method, and the second generation method is a push-pull method

8. The method according to any one of claims 1 to 7 **characterized in that** the tracking servo control is performed by a tracking servo control unit after switching over the generation method of the tracking error signal (TE).

9. An optical disc apparatus which reproduces from and records in a multilayer optical disc (1, 201) providing at least one layer for each of a first recording layer (202) of a reproduction-only and a second recording layer (203) of the recordable area, by a laser light, the optical disc apparatus comprises:
a focus actuator (4) that moves a laser spot in a focusing direction;
a tracking actuator (4) that moves the laser spot in a radial direction of the optical disc;
a signal generation unit (9,10) that generates a tracking error signal (TE) from a reflected light from the optical disc; and
a tracking servo control unit (12) that controls a tracking servo in accordance with the tracking error signal (TE), **characterized in that**
the signal generation unit is configured to
switch over a generation method of the tracking error signal (TE) to a first generation method or a second generation method for a time period during which the tracking servo control is stopped in association with a focus jump, when the focus jump is performed between the first recording layer and the second recording layer, and to
switch over to the first generation method when a target layer of the focus jump is the first recording layer (202), and to the second generation method when the target layer of the focus jump is the second recording layer (203).

10. The apparatus according to claim 9 **characterized in that** the optical disc (1, 201) includes the multilayer optical disc (201) providing at least one layer for each of the first recording layer (202) of the reproduction-only and the second recording layer (203) of the recordable area, to record and reproduce by a same wavelength laser light.

11. The apparatus according to claim 9 or 10 **characterized in that** the signal generation unit (9,10) is configured to switch over the generation method of the tracking error signal (TE) to the first generation method or the second generation method for the time period during which the tracking servo control is stopped in association with the focus jump, and a time period during which a focusing drive signal is output for applying one of an accelerating motion, a uniform motion or a decelerating motion to the focusing actuator (4).

12. The apparatus according to claim 9 or 10 further comprising a spherical aberration correcting unit (19) that corrects a spherical aberration, **characterized in that** the signal generation unit (9, 10) switches over the generation method of the tracking error signal (TE) to the first generation method or the second generation method for the time period during which the tracking servo control is stopped in association with the focus jump and before or after performing a spherical aberration correction.

13. The apparatus according to claim 9 or 10 further comprising a spherical aberration correcting unit (19) that corrects a spherical aberration, **characterized in that** the signal generation unit (9,10) switches over the generation method of tracking error signal (TE) to the first generation method or the second generation method for the time period during which the tracking servo control is stopped in association with the focus jump and a spherical aberration is corrected.

14. The apparatus according to claim 9 or 10 **characterized in that** the signal generation unit (9, 10) switches over the generation method the tracking error signal (TE) to the first generation method when a layer being focused before performing the focus jump is the second recording layer (203) and a target layer of the focus jump is the first recording layer (202), and to the second generation method when the layer being focused before performing the focus jump is the second recording layer and the target layer of the focus jump is the second recording layer.

## Patentansprüche

1. Fokussprungverfahren für eine optische Plattenvorrichtung, die von einer optischen Platte (1, 201) wiedergibt und in dieser aufzeichnet, die wenigstens eine Schicht für jeweils eine erste Aufzeichnungsschicht (202) aus einem nur zur Wiedergabe fähigen Bereich und einer zweiten Aufzeichnungsschicht (202) aus dem zur Aufzeichnung fähigen Bereich, wobei ein Fokussprung zwischen der ersten Aufzeichnungsschicht und der zweiten Aufzeichnungsschicht durchgeführt wird, **dadurch gekennzeichnet, dass** wenn ein Fokussprung zwischen der ersten Aufzeichnungsschicht und der zweiten Aufzeichnungsschicht durchgeführt wird, ein Erzeugungsverfahren für ein Nachführungs-Fehlersignal (TE) in ein erstes Erzeugungsverfahren oder ein zweites Erzeugungsverfahren, das sich von dem ersten Erzeugungsverfahren unterscheidet, während einer Zeitdauer umgeschaltet wird, in der eine Nachführungs-Servosteuerung in Zusammenhang mit einem Fokussprung gestoppt ist, dass
das Erzeugungsverfahren des Nachführungs-Fehlersignals (TE) zu dem ersten Erzeugungsverfahren umgeschaltet wird, wenn eine Ziel-Schicht des Fokussprungs die erste Aufzeichnungsschicht (202) ist, und auf das zweite Erzeugungsverfahren umgeschaltet wird, wenn die Ziel-Schicht des Fokussprungs die zweite Aufzeichnungsschicht (203) ist.

2. Verfahren nach Anspruch 1, **dadurch gekennzeichnet, dass** die optische Platte (201) eine vielschichtige optische Platte (201) umfasst, die wenigstens eine Schicht für jeweils die erste Aufzeichnungsschicht (202) aus dem nur zur Wiedergabe fähigen Bereich und die zweite Aufzeichnungsschicht (203) aus dem zur Aufzeichnung fähigen Bereichs aufweist, um mit Laserlicht mit der gleichen Wellenlänge aufzuzeichnen und wiederzugeben.

3. Verfahren nach Anspruch 1 **dadurch gekennzeichnet, dass** das Erzeugungsverfahren des Nachführungs-Fehlersignals (TE) zu dem ersten Erzeugungsverfahren oder dem zweiten Erzeugungsverfahren während eine Zeitdauer, während der die Nachführungs-Servosteuerung in Zusammenhang mit dem Fokussprung gestoppt ist, und während einer Zeitdauer umgeschaltet wird, während der ein Fokussierungs-Antriebssignal ausgegeben wird, um eine Beschleunigungsbewegung, eine gleichförmige Bewegung oder eine Verzögerungsbewegung an einem Fokussierungs-Aktuator (4) zu bewirken.

4. Verfahren nach Anspruch 1 **dadurch gekennzeichnet, dass** das Erzeugungsverfahren des Nachführungs-Fehlersignals (TE) von dem ersten Erzeugungsverfahren in das zweite Erzeugungsverfahren während einer Zeitdauer umgeschaltet wird, während der die Nachführungs-Servosteurerung in Zusammenhang mit dem Fokussprung gestoppt ist und vor oder nach der Durchführung einer Korrektur der sphärische Aberration.

5. Verfahren nach Anspruch 1 **dadurch gekennzeichnet, dass**, wenn der Fokussprung zwischen der ersten Aufzeichnungsschicht (202) und der zweiten Aufzeichnungsschicht (203) durchgeführt wird, das Erzeugungsverfahren des Nachführungs-Fehlersignals (TE) auf das erste Erzeugungsverfahren oder das zweite Erzeugungsverfahren während einer Zeitdauer umgeschaltet wird, während der die Nachführungs-Servosteuerung in Zusammenhang mit dem Fokussprung gestoppt ist und eine sphärische Aberration korrigiert wird.

6. Verfahren nach Anspruch 1 **dadurch gekennzeichnet, dass** das Erzeugungsverfahren des Nachführungs-Fehlersignals (TE) auf das erste Erzeugungsverfahren umgeschaltet wird, wenn eine Schicht, auf die vor der Durchführung des Fokussprungs fokussiert ist, die zweite Aufzeichnungsschicht (203) ist, und wenn eine Ziel-Schicht des Fokussprungs die erste Aufzeichnungsschicht (202) ist, und auf das zweite Erzeugungsverfahren umgeschaltet wird, wenn die Schicht, auf die vor der Durchführung des Fokussprungs fokussiert ist, die zweite Aufzeichnungsschicht (203) ist und wenn die Ziel-Schicht des Fokussprungs die zweite Aufzeichnungsschicht (203) ist.

7. Verfahren nach einem der Ansprüche 1 bis 6 **dadurch gekennzeichnet, dass** das erste Erzeugungsverfahren ein DPD Verfahren und das zweite Erzeugungsverfahren ein push-pull-Verfahren ist.

8. Verfahren nach einem der Ansprüche 1 bis 7 **dadurch gekennzeichnet, dass** die Nachführung-Servosteuerung von einer Nachführungs-Servosteuerungseinheit durchgeführt wird, die das Erzeugungsverfahren des Nachführungs-Fehlersignals (TE) umschaltet.

9. Optische Plattenvorrichtung, die von einer vielschichtigen optischen Platte (1,201) durch ein Laserlicht wiedergibt und in diese aufzeichnet, die wenigstens eine Schicht für jeweils eine erste Aufzeichnungsschicht (202) aus einem nur zur Wiedergabe fähigen Bereich und eine zweite Aufzeichnungsschicht (203) aus einem zur Aufzeichnung fähigen Bereich aufweist, wobei die optische Plattenvorrichtung umfasst:
einen Fokusaktuator (4), der einen Laserpunkt in einer Fokussierungsrichtung bewegt;
einen Nachführungsaktuator (4), der den Laserpunkt in einer radialen Richtung der optischen Platte bewegt;
eine Signalerzeugungseinheit (9, 10), die ein Nachführungs-Fehlersignal (TE) von einem reflektierten Licht von der optischen Platte erzeugt; und
eine Nachführung-Servosteurerungseinheit (12), die einen Nachführungsservo entsprechend den Nachführungs-Fehlersignal (TE) steuert, **dadurch gekennzeichnet, dass** die Signalerzeugungseinheit konfiguriert ist, um
ein Erzeugungsverfahren des Nachführungs- Fehlersignals (TE) auf ein erstes Erzeugungsverfahren oder ein zweites Erzeugungsverfahren während eine Zeitdauer umzuschalten, während der die Nachführungs-Servosteuerung in Zusammenhang mit einem Fokussprung gestoppt ist, wenn der Fokussprung zwischen der ersten Aufzeichnungsschicht und der zweiten Aufzeichnungsschicht durchgeführt wird, und um auf das erste Erzeugungsverfahren umzuschalten, wenn eine Ziel-Schicht des Fokussprungs die erste Aufzeichnungsschicht (202) ist, und auf das zweite Erzeugungsverfahren umzuschalten, wenn die Zielschicht des Fokussprungs die zweite Aufzeichnungsschicht (203) ist.

10. Vorrichtung nach Anspruch 9 **dadurch gekennzeichnet, dass** die optische Platte (1, 201) die vielschichtige optische Platte (201) umfasst, die wenigstens eine Schicht jeweils für die erste Aufzeichnungsschicht (202) aus dem nur zur Wiedergabe fähigen Bereich und die zweite Aufzeichnungsplatte (202) aus dem zur Aufzeichnung fähigen Bereich bereitstellt, um mit Laserlicht der gleichen Wellenlänge aufzuzeichnen und wiederzugeben.

11. Vorrichtung nach Anspruch 9 oder 10 **dadurch gekennzeichnet, dass** die Signalerzeugungseinheit (9, 10) konfiguriert ist, um das Erzeugungsverfahren des Nachführungs-Fehlersignals (TE) auf das erste Erzeugungsverfahren oder das zweite Erzeugungsverfahren während einer Zeitdauer umzuschalten, während der die Nachführungs-Servosteuerung in Zusammenhang mit dem Fokussprung gestoppt ist, und während einer zweiten Zeitdauer umzuschalten, während der ein Fokussierungs-Antriebssignal ausgegeben wird, um eine Beschleunigungsbewegung, eine gleichförmige Bewegung oder eine Verzögerungsbewegung an dem Fokussierungsaktuator (4) zu bewirken.

12. Vorrichtung nach Anspruch 9 oder 10, ferner umfassend eine Aberrations- Korrektureinheit (19), die eine sphärische Aberration korrigiert, **dadurch gekennzeichnet, dass** die Signalerzeugungseinheit (9, 10) das Erzeugungsverfahren des Nachführungs- Fehlersignals (TE) auf das erste Erzeugungsverfahren oder das zweite Erzeugungsverfahren während einer Zeitdauer umschaltet, während der die Nachführungs-Servosteuerung in Zusammenhang mit dem Fokussprung gestoppt ist in vor oder nach der Durchführung einer Korrektur der sphärische Aberration.

13. Vorrichtung nach Anspruch 9 oder 10 ferner umfassend eine Aberrations-Korrektureinheit (19), die eine sphärische Aberration korrigiert, **dadurch gekennzeichnet, dass** die Signalerzeugungseinheit (9, 10) das Erzeugungsverfahren des Nachführungs- Fehlersignals (TE) auf das erste Erzeugungsverfahren oder das zweite Erzeugungsverfahren während einer Zeitdauer umschaltet, während der die Nachführungs-Servosteuerung im Zusammenhang mit dem Fokussprung gestoppt ist und eine sphärische Aberration korrigiert wird.

14. Vorrichtung nach Anspruch 9 oder 10 **dadurch gekennzeichnet, dass** die Signalererzeugungseinheit (9, 10) das Erzeugungsverfahren des Nachführungs-Fehlersignals (TE) auf das erste Erzeugungsverfahren umschaltet, wenn eine Schicht, auf die vor der Durchführung des Fokusspungs fokussiert ist, die zweite Aufzeichnungsschicht (203) ist und wenn eine Ziel-Schicht des Fokussprungs die erste Aufzeichnungsschicht (202) ist, und auf das zweite Erzeugungsverfahren umschaltet, wenn die Schicht auf die vor der Durchführung des Fokussprungs fokussiert ist, die zweite Aufzeichnungsschicht ist und wenn die Ziel-Schicht des Fokussprungs die zweite Aufzeichnungsschicht ist.

## Revendications

1. Procédé de saut de focalisation pour un appareil de disque optique qui reproduit et fait enregistrer dans un disque optique (1, 201) pourvoyant au moins une couche pour chacune d'une première couche d'enregistrement (202) de reproduction seulement et d'une seconde couche d'enregistrement (203) de la zone enregistrable, où un saut de focalisation est réalisé entre la première couche d'enregistrement et la seconde couche d'enregistrement, **caractérisé en ce qu'**
- alors quand un saut de focalisation est réalisé entre la première couche d'enregistrement et la seconde couche d'enregistrement, un procédé de génération du signal d'erreur de suivi de piste (TE) est commuté au premier procédé de génération ou au second procédé de génération différent du premier procédé de génération pour une période de temps pendant laquelle la servocommande de suivi de piste est arrêtée en association avec le saut de focalisation,
- le procédé de génération du signal d'erreur de suivi de piste (TE) est commuté au premier procédé de génération quand une couche cible du saut de focalisation est la première couche d'enregistrement (202), et au second procédé de génération quand la couche cible du saut de focalisation est la seconde couche d'enregistrement (203).

2. Procédé selon la revendication 1 **caractérisé en ce que** le disque optique (201) comprend un disque optique multicouche (201) pourvoyant au moins une couche pour chacune de la première couche d'enregistrement (202) de reproduction seulement et de la seconde couche d'enregistrement (203) de la zone enregistrable, pour enregistrer et reproduire par une lumière laser de la même longueur d'onde.

3. Procédé selon la revendication 1 **caractérisé en ce que** le procédé de génération du signal d'erreur de suivi de piste (TE) est commuté au premier procédé de génération ou au second procédé de génération pour la période de temps pendant laquelle la servocommande de suivi de piste est arrêtée en association avec le saut de focalisation, et une période de temps pendant laquelle le signal de focalisation est sorti pour appliquer l'une d'entre un mouvement d'accélération, un mouvement uniforme ou un mouvement de décélération à un actionneur de focalisation (4).

4. Procédé selon la revendication 1 **caractérisé en ce que** le procédé de génération du signal d'erreur de suivi de piste (TE) est commuté au premier procédé de génération ou au second procédé de génération pour la période de temps pendant laquelle la servocommande de suivi de piste est arrêtée en association avec le saut de focalisation et avant ou après la réalisation d'une correction d'aberration sphérique.

5. Procédé selon la revendication 1 **caractérisé en ce qu'**alors quand le saut de focalisation est réalisé entre la première couche d'enregistrement (202), et la seconde couche d'enregistrement (203), le procédé de génération du signal d'erreur de suivi de piste (TE) est commuté au premier procédé de génération ou au second procédé de génération pour la période de temps pendant laquelle la servocommande de suivi de piste est arrêtée en association avec le saut de focalisation et une aberration sphérique est corrigée.

6. Procédé selon la revendication 1 **caractérisé en ce que** le procédé de génération du signal d'erreur de suivi de piste (TE) est commuté au premier procédé de génération quand une couche étant focalisée avant réaliser le saut de focalisation est la seconde couche d'enregistrement (203) et une couche cible du saut de focalisation est la première couche d'enregistrement (202), et au second procédé de génération quand la couche étant focalisée avant réaliser le saut de focalisation est la première couche d'enregistrement (203) et une couche cible du saut de focalisation est la seconde couche d'enregistrement (203).

7. Procédé selon l'une quelconque des revendications 1 à 6, **caractérisé en ce que** le premier procédé de génération est un procédé DPD et le second procédé de génération est un procédé push-pull.

8. Procédé selon l'une quelconque des revendications 1 à 7, **caractérisé en ce que** la servocommande de suivi de piste est réalisée par une unité de servocommande de suivi de piste après la commutation sur le procédé de génération du signal d'erreur de suivi de piste (TE).

9. Appareil de disque optique qui reproduit et fait enregistrer dans un disque optique multicouche (1, 201) pourvoyant au moins une couche pour chacune d'entre une première couche d'enregistrement (202) de reproduction seulement et une seconde couche d'enregistrement (203) de la zone enregistrable, par une lumière laser, l'appareil de disque optique comprend :
- un actionneur de focalisation (4) qui fait mouvoir un spot laser dans une direction de focalisation ;
- un actionneur de suivi de piste (4) qui fait mouvoir le spot laser dans une direction radiale du disque optique;
- une unité de génération de signaux (9, 10) qui fait générer un signal d'erreur de suivi de piste (TE) de la lumière réfléchie du disque optique ; et
- une unité de servocommande de suivi de piste (12) qui commande une suivi de piste conformément au signal d'erreur de suivi de piste (TE), **caractérisé en ce que** l'unité de génération de signaux est configurée pour
- commuter un procédé de génération du signal d'erreur de suivi de piste (TE) à un premier procédé de génération ou à un second procédé de génération pour une période de temps pendant laquelle la servocommande de suivi de piste est arrêtée en association avec le saut de focalisation, quand le saut de focalisation est réalisé entre la première couche d'enregistrement et la seconde couche d'enregistrement, et pour
- commuter au premier procédé de génération quand une couche cible du saut de focalisation est la première couche d'enregistrement (202), et au second procédé de génération quand la couche cible du saut de focalisation est la seconde couche d'enregistrement (203).

10. Appareil selon la revendication 9, **caractérisé en ce que** le disque optique (1, 201) comprend le disque optique multicouche (201) pourvoyant au moins une couche pour chacune d'entre la première couche d'enregistrement (202) de reproduction seulement et la seconde couche d'enregistrement (203) de la zone enregistrable, pour enregistrer et reproduire par une lumière laser de même longueur d'onde.

11. Appareil selon la revendication 9 ou 10, **caractérisé en ce que** l'unité de génération de signaux (9, 10) est configurée pour commuter le procédé de génération du signal d'erreur de suivi de piste (TE) au premier procédé de génération ou au second procédé de génération pour la période de temps pendant laquelle la servocommande de suivi de piste est arrêtée en association avec le saut de focalisation, et une période de temps pendant laquelle le signal de focalisation est sorti pour appliquer l'une d'entre un mouvement d'accélération, un mouvement uniforme ou un mouvement de décélération à l'actionneur de focalisation (4).

12. Appareil selon la revendication 9 ou 10, comprenant de plus une unité de correction d'aberration sphérique (19) qui corrige une aberration sphérique, **caractérisé en ce que** l'unité de génération de signaux (9, 10) fait commuter le procédé de génération du signal d'erreur de suivi de piste (TE) au premier procédé de génération ou au second procédé de génération pour la période de temps pendant laquelle la servocommande de suivi de piste est arrêtée en association avec le saut de focalisation et avant et après la réalisation d'une correction d'aberration sphérique.

13. Appareil selon la revendication 9 ou 10, comprenant de plus une unité de correction d'aberration sphérique (19) qui fait corriger une aberration sphérique, **caractérisé en ce que** l'unité de génération de signaux (9, 10) fait commuter le procédé de génération du signal d'erreur de suivi de piste (TE) au premier procédé de génération ou au second procédé de génération pour la période de temps pendant laquelle la servocommande de suivi de piste est arrêtée en association avec le saut de focalisation et une aberration sphérique est corrigée.

14. Appareil selon la revendication 9 ou 10, **caractérisé en ce que** l'unité de génération de signaux (9, 10) fait commuter le procédé de génération du signal d'erreur de suivi de piste (TE) au premier procédé de génération quand une couche étant focalisée avant réaliser le saut de focalisation est la seconde couche d'enregistrement (203) et une couche cible du saut de focalisation est la première couche d'enregistrement (202), et au second procédé de génération quand la couche étant focalisée avant réaliser le saut de focalisation est la première couche d'enregistrement et la couche cible du saut de focalisation est la seconde couche d'enregistrement.
